# EUROPEAN PATENT APPLICATION

(11) **EP 3 034 436 A1**
(43) Date of publication of application: **22.06.2016**
(21) Application number: 15164818.5
(22) Date of filing: 23.04.2015
(51) Int. Cl.: B65G 15/20, B65G 57/04

(54) **AN APPARATUS FOR SELECTIVELY STACKING TILES CONVEYED ON A CONVEYOR LINE**

(30) Priority: 17.12.2014 IT MO20140361
(71) Applicant: Gruppo Tecnoferrari S.p.A., 42013 Casalgrande (Reggio Emilia) (IT)
(72) Inventor: Ferrari, Paola, 41049 Sassuolo (Modena) (IT)
(74) Representative: Gagliardelli, Fabrizio

(57) **Abstract**

The invention concerns an apparatus for selectively stacking tiles conveyor on a conveyor line, along which the tiles (2) are transferred while being kept gripped laterally and where each of them is commanded, according to the characteristics thereof, to be deconstrained from the support or lateral grip by intervention of at least a suitable pusher member (4) acting vertically in a downwards direction. The single tile (2) is deconstrained from the line on command so as to be located on a precise predetermined position, located inferiorly. The pusher member (4) comprises: at least one suction cup device (5), which is intended to come into contact, upon command, and to interact with the upper surface of the single tile (2) up to causing detachment thereof from the edge support or lateral gripping and to perform a detention or motion adjustment on the single tile (2) for at least a part of the subsequent run thereof starting from the detachment thereof from the relative edge support or lateral grip.

## Description

The present invention relates to an apparatus for selectively stacking tiles transferred from a conveyor line.

A frequent application of the invention can be found in selection lines of ceramic tiles in which the tiles are transferred while being kept gripped laterally and where each of them is commanded, according to the characteristics thereof, to be deconstrained from support or lateral gripping by intervention of a suitable pusher member, then to be left to fall onto a precise predetermined position located below so as to form a stack of homogeneous tiles.

This method is not free of drawbacks, especially in a case of tiles of certain dimensions and a certain weight, as well as in a case of tiles which must be handled with care because they have parts such as corners that have undergone working and the like and are fragile and which, in a case of damage, will be subject to chipping that can ruin the piece. For this reason too it is not unusual to include working specifications that serve to contain the free falling run of the tile, once selected, in order to minimise the velocity of impact with the rest or with the stack already partially formed.

There exist other types of machine and equipment which instead of using the lateral gripping of the tiles and the ejection thereof using pushing members, use a true and proper selective collecting system from the supply line with suction cup systems which operate transversally of the supply line so as to transfer and deposit the collected tiles in stations located by the flank of the tiles. The main drawbacks of this type of equipment are constituted by the constructional complication, the cost and in some cases by a limitation of the functioning velocity of the machine.

A main aim of the present invention is to obviate the drawbacks mentioned in the foregoing of the prior art and, in particular, to be able to operate with equipment of a type using the simple and rapid selection system using a pusher member without having the need for special constructional modifications to the existing equipment.

A further aim of the present invention is to have the possibility to calibrate or appropriately graduate, according to needs, both the ejection action and the depositing and forming action of the stack of tiles.

An advantage offered by the invention is to be able to be easily installed on usual selection lines with lateral treatment of the tiles and ejection commanded by pusher members thereof.

These and other aims and advantages are attained by the present invention as it is described, illustrated and characterised in the present description, the relative drawings and the claims.

Further characteristics and advantages of the invention will more fully emerge from the description that follows of a preferred though not exclusive embodiment thereof, illustrated purely by way of non-limiting example, in which:

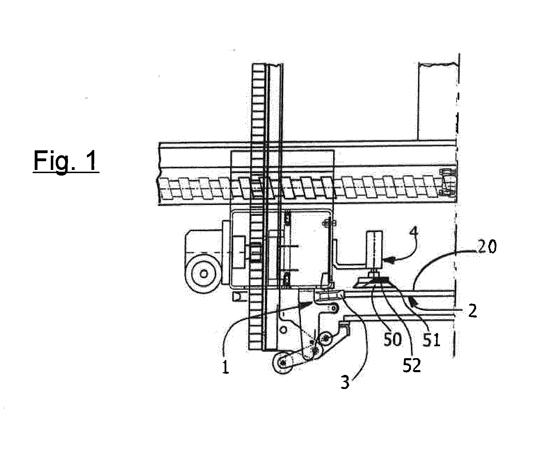

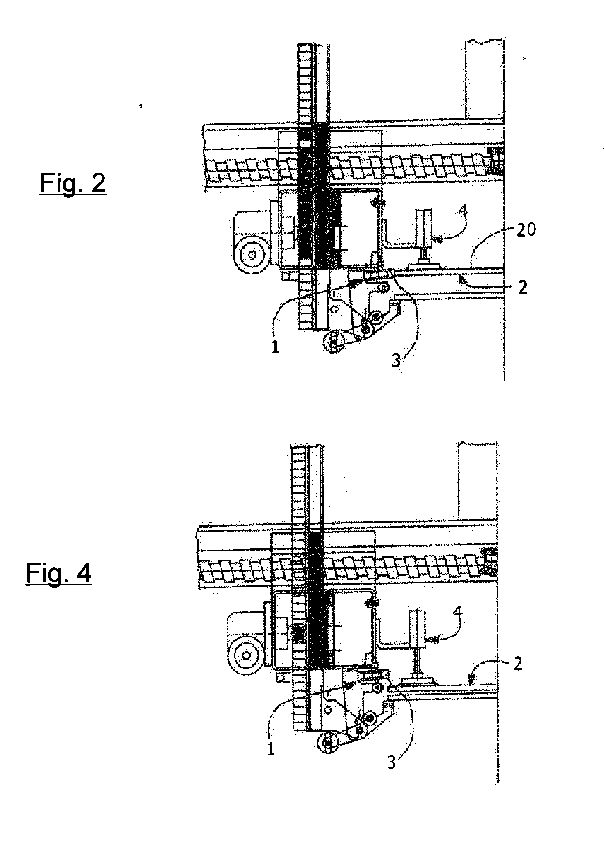

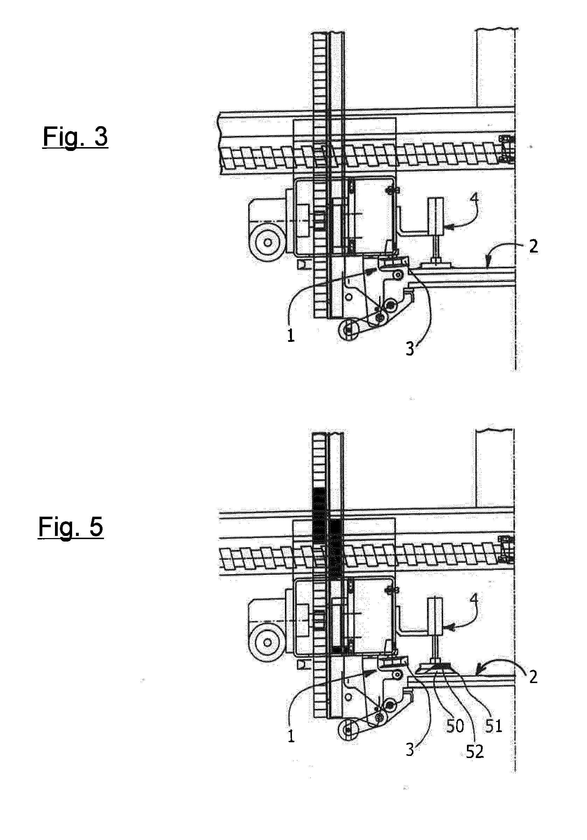

- figures 1, 2, 3, 4, 5 show, in a same partial transversal section of a conveyor line for selection of ceramic tiles, five significant successive steps of a collecting operation of a tile.

With reference to the above-mentioned figures of the drawings, 1 schematically denotes a conveyor line of ceramic tiles 2, along which the tiles 2 are conveyed arranged in a line, one after another.

In the example, the conveyor line 1 supplies a selection line along which the tiles 2 transit in order to be selected on the basis of previously-determined characteristics. In practice the tiles 2 are ejected on command from the line in precise positions where they are stacked in homogeneous groups.

In the line, the tiles 2 are supported and gripped laterally by pairs of parallel conveyor belts 3.

In fact, the tiles 2 are held still by the belts 3 until, along the line, their deconstraining is commanded, which is invoked by the action of at least a pusher member 4, which carries out its action vertically in a downwards direction.

The action of the pusher member 4 is commanded so that the ejected tile 2 becomes located in the desired position i.e. such as to form the stack of tiles destined thereto. The stack is located inferiorly and is supported on usual means by means of which the stack, once completed, is evacuated so as to make space for a formation of a new stack.

The pusher member 4 is substantially constituted by a linear actuator provided with a rod at a lower free end of which at least a suction cup device 5 is solidly connected, which suction cup device 5 is able to come into contact and interact with the upper surface of the single tile 2.

The suction cup device 5 has the aim of coming into contact, on command, with the upper surface 20 of the tile 2 and pushing the tile downwards up to producing detachment thereof from the belts 3 which constitute the support or lateral grip thereof during the transport step along the line 1.

Further, the suction cup device (5) is not limited to a simple contact, but interacts with the upper surface 20 of the single tile 2, applying the suction function thereof, in particular, over at least a part of the subsequent run thereof as the detachment thereof from the relative support or lateral grip constituted by the belts 3.

The suction cup device 5 in fact comprises a chamber 50 adapted to allow the formation of a negative pressure internally thereof and directed downwards.

In particular the suction chamber 50 is delimited by a peripheral edge 51 elastically deformable and by a stiff central part 52, or in any case less deformable and essentially flat, provided for contacting a portion of the upper surface 20 of said single tile 2.

The peripheral edge 51, which delimits the chamber of the suction cup device 5 can be advantageously realised so that, by virtue of the elastic deformability thereof, it enables the flat central part 52, during the pushing action exerted on the tile 2, to come into contact with the upper surface 20 of the tile so as to exert thereon the necessary deconstraining action from the belts 3, thus functioning as an ejector.

The suction cup device 5 thus has a double function, operating when necessary with the central part 52 so as to supply the push downwards in order to eject the tile 2 and realising, in the subsequent part of the run thereof towards the top of the underlying stack, a regulation of the acceleration and velocity of the downwards run of the tile such as to make the impact with the rest or the already partly-formed stack acceptable. Therefore, by carrying out a retaining or regulating function of the motion on the single tile 2 over at least a part of the subsequent run thereof starting from detachment thereof from the relative support or lateral grip, the invention prevents the tile from being subject to undesired impacts, also preventing uncontrolled impacts at the moment of resting on the underlying stack.

Also in the initial step, the presence of the suction cup can make the initial contact of the pusher member with the tile 2 less brusque, with the tile 2 still to be ejected by the belts.

The control of the descent of the tile, as well as drastically reducing the possibility of damage due to chipping and the like, further also offers the advantage of making the whole operation less noisy. Further, in a case of smooth tiles, it can prevent a special centring of the tile on the stack of tiles situated inferiorly.

In a further embodiment, the suction cup device (5) comprises a chamber 50 designed for formation of a negative pressure inside the chamber 50, via an external suction device, for example operated in synchrony with said pusher member.

## Claims

1. An apparatus for selectively stacking tiles in motion on a conveyor line, along which the tiles (2) are transferred while being supported edgewise, and where each of them, in accordance with its characteristics, is controlled in such a way that it is released from the edge support or gripping due to operation of at least a pusher member (4), acting vertically downwards, in order to be placed in a precise selected position located below, **characterized in that** said at least a pusher member (4) comprises at least one suction cup device (5), which is intended to come into contact, upon command, and to interact with the upper surface of the single tile (2) to cause detachment thereof from said edge support or gripping and to perform a detention or motion adjustment on the single tile (2) for at least a part of the subsequent path of the latter starting from its detachment from the relative edge support or gripping and to perform its action on the single tile (2) for at least a part of the subsequent path of the latter from its detachment from the corresponding edge support or gripping.

2. The apparatus of claim 1, **characterized in that** said suction cup device (5) comprises a chamber (50) designed for formation of a negative pressure thereinside and turned downwards.

3. The apparatus of claim 2, **characterized in that** said suction cup device comprises a chamber (50) designed for formation of a negative pressure thereinside, and which is delimited internally by a peripheral edge (51) elastically deformable and by a stiff and essentially flat central part (52), provided for contacting a portion of the upper surface of said single tile (2) as an ejector.

4. The apparatus of claim 3, **characterized in that** said suction cup device (5) comprises a chamber designed for formation of a negative pressure thereinside through an external suction device operated in synchrony with said pusher member (4).
